# EUROPÄISCHE PATENTSCHRIFT

(11) **EP 0 835 511 B1**
(45) Veröffentlichungstag und Bekanntmachung des Hinweises auf die Patenterteilung: **23.02.2000**
(21) Anmeldenummer: 96918589.1
(22) Anmeldetag: 19.06.1996
(51) Int. Cl.: G21C 9/016

(54) **KERNREAKTOR MIT KERNSCHMELZENKÜHLUNG IM AUSBREITUNGSRAUM**
NUCLEAR REACTOR WITH MOLTEN CORE COOLING IN THE PROPAGATION CHAMBER
REACTEUR NUCLEAIRE A REFROIDISSEMENT DU COEUR EN FUSION DANS LA CHAMBRE DE PROPAGATION

(30) Priorität: 27.06.1995 DE 19523303
(43) Veröffentlichungstag der Anmeldung: 15.04.1998
(73) Patentinhaber: SIEMENS AKTIENGESELLSCHAFT, 80333 München (DE)
(72) Erfinder: WISTUBA, Lothar, D-91074 Herzogenaurach (DE); HAU, Gerhard, D-72461 Albstadt (DE); BITTERMANN, Dietmar, D-90765 Fürth (DE); WEISSHÄUPL, Horst, D-91074 Herzogenaurach (DE)
(86) Internationale Anmeldenummer: DE9601083
(87) Internationale Veröffentlichungsnummer: WO9701851

(56) Entgegenhaltungen:
- EP-A- 0 419 159
- DE-A- 4 322 107
- US-A- 4 113 560
- KERNTECHNIK, Bd. 59, Nr. 4/05, 1.August 1994, Seiten 151-155, XP000457567 KUCZERA B ET AL: "TOWARDS AN ENHANCED QUALITY IN PRESSURIZED WATER REACTOR SAFETY"

## Beschreibung

Kernreaktor mit einem Ausbreitungsraum für Kernschmelze, der mit einer zu einem Kühlmittelreservoir führenden Kühlmittelleitung versehen ist

Die Erfindung betrifft einen Kernreaktor mit einem Ausbreitungsraum für Kernschmelze, der mit einer von einem Kühlmittelreservoir ausgehenden Kühlmittelleitung versehen ist, die eine temperaturabhängig öffnende Vorrichtung mit einem Schmelzkörper aufweist.

Eine solche temperaturabhängig öffnende Vorrichtung ist aus EP 0 419 159 A2 bekannt. Es handelt sich dabei um einen Verschlußstopfen in einer Wasserzuleitung, der infolge der hohen Temperatur der Kernschmelze aufschmilzt. Dadurch gelangt eine sehr große Wassermenge durch eine sehr große Öffnung hindurch schnell auf die heiße Kernschmelze, was zu einer Dampfexplosion führen könnte.

Aus der US 4,113,560 ist eine Sprühvorrichtung zum Kühlen von Kernschmelze bekannt. Diese Vorrichtung wird mittels einer Pumpe aus einem Tank gespeist. Die Sprühvorrichtung umfaßt nur einen Sprühkopf, der den Ausbreitungsraum für die Kernschmelze nur von einer Stelle aus erfassen kann.

Bei dem aus der DE-OS 40 41 295 bekannten Kernreaktor der oben genannten Art ist in der den Reaktordruckbehälter aufnehmenden Reaktorgrube ein Stahltiegel mit mehreren inneren Schutzschichten angeordnet, um der hohen Temperatur der Kernschmelze zu widerstehen. Durch die Wand des Tiegels führt in der oberen Hälfte ein Kühlmittelrohr, an dessen Ende im Inneren des Tiegels ein Schmelzstopfen sitzt. Das andere Ende des Kühlmittelrohres führt zu einem Kühlmittelspeicher. Bei einem Austritt von Kernschmelze aus dem Reaktordruckbehälter wird diese unmittelbar unterhalb des Reaktordruckbehälters innerhalb der Reaktorgrube aufgefangen. Bei einem Anstieg der Kernschmelze bis in die Höhe der Auslaßöffnung der Kühlleitung erfolgt durch direkten Kontakt oder in Folge von Wärmestrahlung ein Aufschmelzen des Schmelzstopfens. Hierdurch wird Kühlwasser in großer Menge auf die Oberfläche der Kernschmelze zu deren direkten Kühlung geleitet. Eine indirekte Kühlung der Kernschmelze erfolgt über ein außerhalb des Tiegels angeordnetes Kühlsystem. Die direkte Kühlung setzt erst deutlich nach der indirekten Kühlung ein und führt zu einer schnellen Flutung des Tiegels, wobei große Mengen Kühlwasser in Kontakt und der Kernschmelze gelangen können.

Der Erfindung liegt die Aufgabe zugrunde, eine passiv ausgelöste, frühzeitige, direkte Kühlung einer in den Ausbreitungsraum einströmenden Kernschmelze zu ermöglichen. Dabei soll die Schmelze möglichst weitgehend erfaßt werden und es soll trotzdem zu keiner Dampfexplosion kommen können.

Die Aufgabe wird gemäß der Erfindung dadurch gelöst, daß die Kühlmittelleitung im Ausbreitungsraum eine Sprühleitung mit in das Innere des Ausbreitungsraumes gerichteten Sprühdüsen ist, deren Sprühfläche zumindest den größten Teil des Querschnitts des Ausbreitungsraumes erfaßt, und daß die Vorrichtung eine passiv temperaturabhängig öffnende, den Schmelzkörper umfassende Armatur ist, die so gesteuert ist, daß sie beim Eintreten der Kernschmelze in den Ausbreitungsraum öffnet und dadurch das Kühlmittelreservoir mit der Sprühleitung verbindet.

Der Querschnitt des Ausbreitungsraumes kann rundlich oder vieleckig, z.B. rechteckig oder sechseckig, sein.

Durch die schnelle, von Anfang an wirkende großflächige Sprühung entsteht auf der Kernschmelze eine Kruste, die die Wärmeabstrahlung wesentlich verringert. Gleichzeitig füllt sich der Auffangraum oberhalb der Kruste mit einer Dampfatmosphäre, die die thermische Belastung der Baustrukturen drastisch senkt, so daß man ohne besondere Schutzschichten (z.B. an der Decke) auskommen kann.

Infolge des Besprühens der Kernschmelzenoberfläche wird das Wasser gleichmäßig darauf verteilt und so verhindert, daß Wasser in die Kernschmelze eindringt und Dampfexplosionen verursacht. Im gleichen Sinne wirkt die durch das Sprühen ständig dicker werdende Kruste, weil sie die Wechselwirkungen zwischen Kernschmelze und Wasser begrenzt, vor allem also Dampfexplosionen verhindert.

Die Sprühleitung kann in Weiterbildung der Erfindung vorteilhaft an den Wänden des Auffangraumes so angeordnet sein, daß sie den Querschnitt des Auffangraumes umschließt. Dort läßt sie sich einfach befestigen und ergibt ohne weiteres einen großflächigen Sprühschleier.

Die Sprühleitung kann alternativ oder zusätzlich von dem Boden beabstandet über dem Querschnitt des Ausbreitungsraums verlaufen, wie es beispielsweise bei Berieselungsanlagen in der Landwirtschaft mit parallel zueinander verlaufenden Rohrleitungen zur Überdeckung einer großen Fläche durchgeführt wird. Es können hierzu eine Vielzahl von Sprühleitungen vorgesehen sein, die parallel zueinander verlaufen oder sich kreuzen.

Zur Erhöhung der Betriebssicherheit ist es günstig, wenn die Sprühleitung eine Ringleitung mit mehreren Einspeisungen ist.

Die Armatur, die passiv temperaturabhängig öffnen kann, ist nach einer wichtigen Weiterbildung unterhalb der Sprühleitung so angeordnet, daß sich der Schmelzkörper, der einen Dichtteller gegen den Druck des Kühlmittels geschlossen hält, am Boden des Ausbreitungsraumes befindet.

Vorteilhaft ist das schnelle Einsetzen der Sprühung. Vorzugsweise ist die Vorrichtung eine passiv öffnende Armatur, die insbesondere temperaturabhängig ein Öffnen der Kühlmittelleitung bedingt. Deshalb besteht eine wichtige Weiterbildung der Erfindung darin, daß die temperaturabhängig öffnende Vorrichtung unterhalb der Sprühleitung so angeordnet ist, daß sich ein den Dichtteller gegen den Druck des Kühlmittels geschlossen haltender Schmelzkörper am Boden des Ausbreitungsraumes befindet.

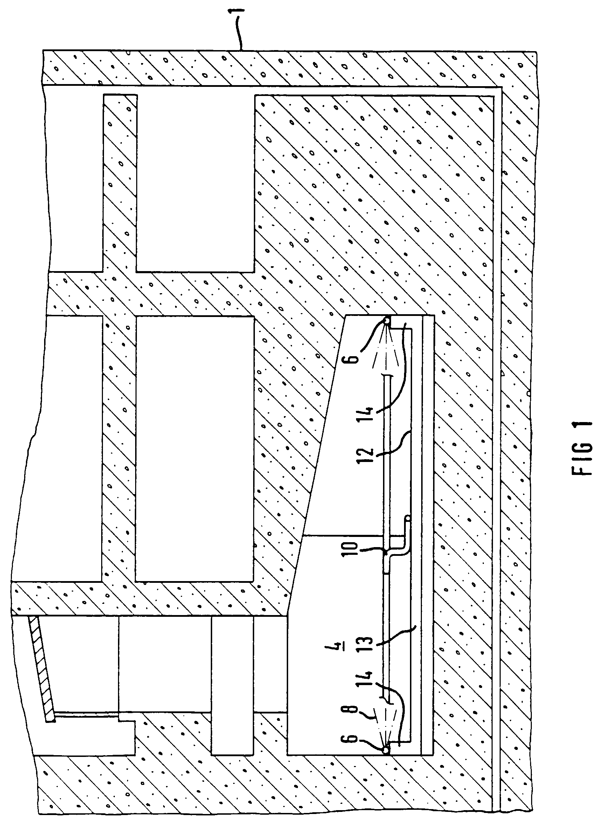

Zur näheren Erläuterung der Erfindung wird im folgenden ein Ausführungsbeispiel beschrieben. Es zeigt
- FIG 1: einen Vertikalschnitt aus einem Kernreaktor,
- FIG 2: einen Horizontalschnitt aus einem Kernreaktor und
- FIG 3 bis 6: eine Vorrichtung zur Verwendung bei der Erfindung in einem Vertikalschnitt in wesentlich größerem Maßstab.

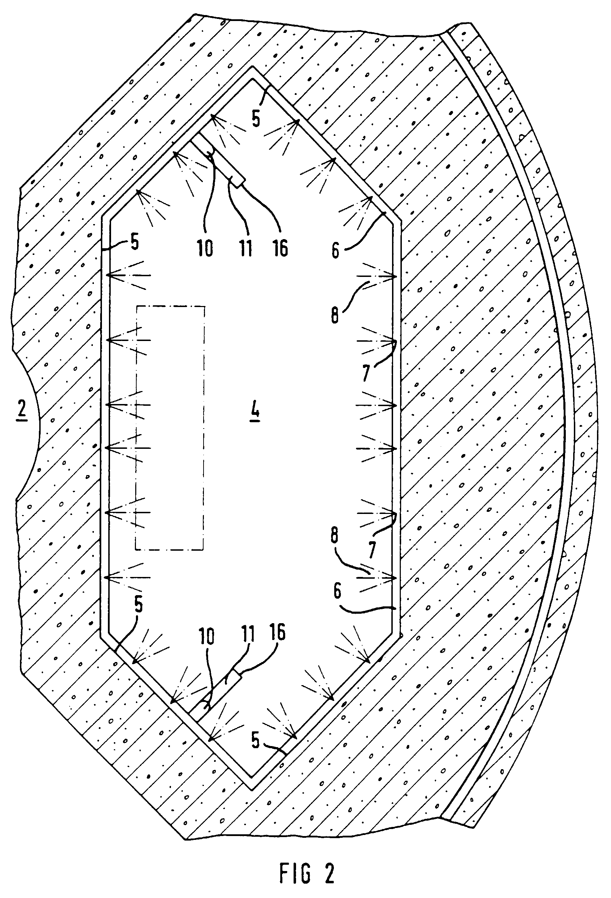

Das Reaktorgebäude 1 besteht aus Beton und enthält einen nicht dargestellten Reaktordruckbehälter mit dem Reaktorkern in der zentralen Reaktorgrube 2 (siehe FIG 2). Von dieser führt eine nicht dargestellte gegen die Horizontale geneigt verlaufende Sammelleitung in einen Ausbreitungsraum 4 im unteren Teil des Reaktorgebäudes 1.

Der Ausbreitungsraum 4 hat, wie Fig. 2 zeigt, einen länglichen Sechseckquerschnitt mit ebenen vertikalen Wänden 5. Um den gesamten Querschnitt verläuft eine Ringleitung 6, die als Sprühleitung mit Sprühdüsen 7 ausgebildet ist. Die Sprühdüsen 7, die im einfachsten Fall als zylindrische Löcher in der Ringleitung 6 hergestellt sind, sind in horizontaler Richtung in das Innere des Ausbreitungsraumes 4 gerichtet, so daß sein Querschnitt großflächig besprüht werden kann. Der Sprühschleier ist durch die Strahlen 8 angedeutet.

Zur Speisung der Ringleitung 6 ist ein nicht dargestelltes Reservoir im oberen Teil des Reaktorgebäudes 1 so hoch angeordnet, daß ein für die sichere Versorgung geeigneter Druck von z.B. 1 bar an der Ringleitung 6 vorhanden ist. Die Einspeisung erfolgt durch zwei Einspeiseleitungen 10, die an nahezu gegenüberliegenden Seiten der Ringleitung 6 angebracht sind. Sie sitzen als abgewinkelte Rohrstutzen mit ihrem unteren Schenkel 11 auf dem Boden 12 einer Auffangwanne 13, auf deren oberen Rand 14 die Ringleitung 6 liegt.

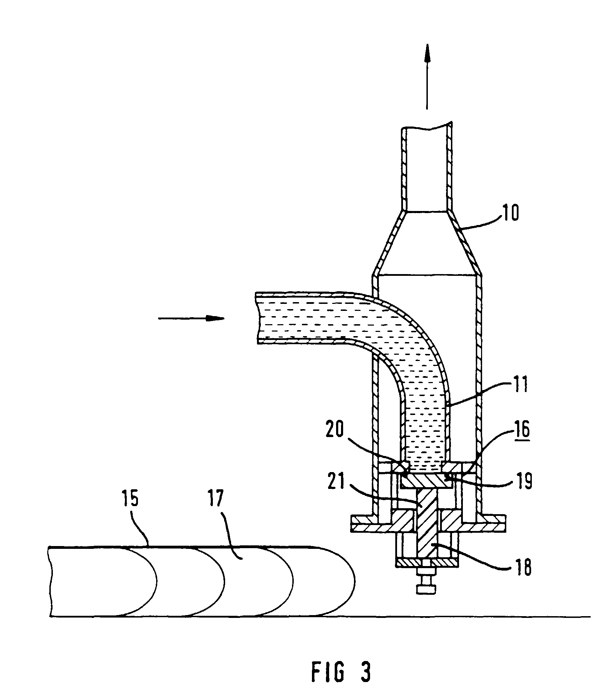

Durch die tiefe Lage des Schenkels 11 ist sichergestellt, daß die temperaturempfindliche Vorrichtung 16 die Einspeisung des Kühlmittels in Gang setzt, sobald sich die schematisch angedeutete Kernschmelze 17 auf dem Boden 12 ausbreitet (siehe FIG 3). Sie zerstört dann sofort einen Schmelzkörper 18 aus Kunststoff oder einem niedrig schmelzenden Metall, mit dem der Dichtteller 19 der Vorrichtung 16 gegen den Druck des Kühlmittels auf den Dichtsitz 20 gedrückt wird. Das Kühlmittel gelangt dann durch die Einspeiseleitungen 10 in die Ringleitung 6 und sorgt von dort als Sprühschleier 8 für die gewünschte schnelle Abkühlung und Bildung einer Kruste 15 auf der Kernschmelze 17. Gleichzeitig kommt es wegen der feinen Verteilung des Wassers ohne Dampfexplosionen zu einer die Strukturen des Reaktorgebäudes 1 abschirmenden Dampfatmosphäre .

Das Kühlmittel durchströmt großflächig das Gehäuse der Vorrichtung 16 und sorgt dadurch für dessen Integrität, auch wenn die Schmelze 17 höher steigt. Es ist aber auch möglich, den zum Dichtteller 20 führenden Schaft 21 so zu verlängern, daß die Vorrichtung 16 über dem höchsten zu erwartenden Stand der Schmelze 17 liegt, ohne daß das schnelle Öffnen der Vorrichtung 16 durch den am Boden 12 gelegenen Schmelzkörper 18 beeinträchtigt wird.

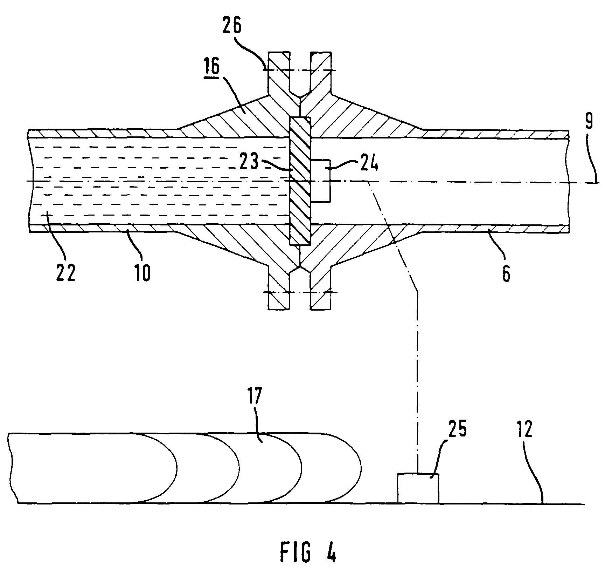

FIG 4 zeigt in einem Längsschnitt eine Ausführungsform der Vorrichtung 16, wobei diese soweit über dem Boden 12 des Ausbreitungsraums 4 angeordnet ist, daß die schematisch dargestellte Kernschmelze deutlich unterhalb der Vorrichtung 16 verbleibt. Die Vorrichtung 16 liegt an einer Flanschverbindung 26, an der die entlang einer Hauptachse 9 gestreckte Einspeiseleitung 10 mit der Ringleitung 6 verbunden ist. Die Einspeiseleitung 10 ist in der Vorrichtung 16 an der Flanschverbindung 26 in ihrem Querschnitt durch eine Berstscheibe 23 versperrt. An der Berstscheibe 23 liegt innerhalb der Einspeiseleitung 10 das Kühlmittel 22, beispielsweise mit einem Druck von etwa 1 bar, an. In der Ringleitung 6 ist an der Berstscheibe 23 ein Piezoelement 24 fest angebracht, welches mit einem Thermoelement 25 verbunden ist, daß auf dem Boden 12 des Ausbreitungsraums 4 liegt. Bei Ausbreitung der Kernschmelze 17 innerhalb des Ausbreitungsraumes 4 wird durch die Kernschmelze mittels direktem Kontakt oder durch Wärmestrahlung ein Signal innerhalb des Thermoelementes 25 erzeugt, welches an das Piezoelement 24 weitergegeben wird. Infolge des an dem Piezoelement 24 anliegenden Signals führt dieses eine Ausdehnung durch, die zu einer Zerstörung der Berstscheibe 23 und damit einem Einströmen des Kühlmittels 22 in die Ringleitung 6 führt. Hierdurch wird die Einleitung des Sprühvorganges und damit eine Kühlung der Kernschmelze durch Besprühen in Gang gesetzt.

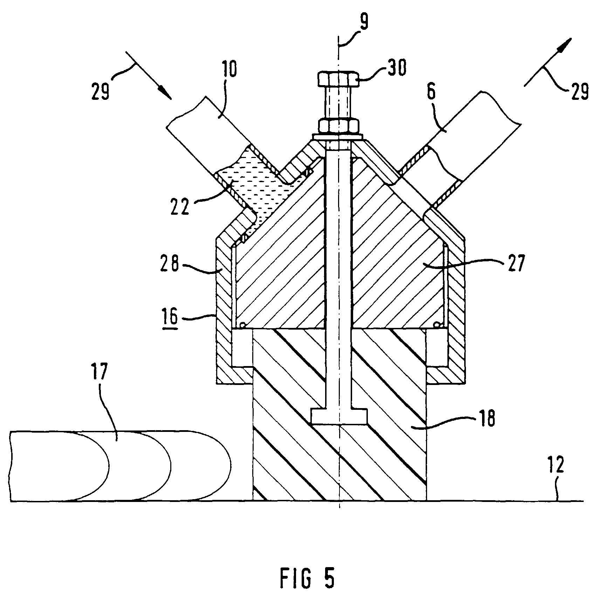

FIG 5 zeigt in einem Längsschnitt eine zu FIG 3 analoge Ausführungsform der Vorrichtung 16, wobei diese symmetrisch entlang einer Hauptachse 9 gestreckt ist. In dem geodätisch oberen Bereich verläuft die Wand 28 der Vorrichtung 16 gegenüber der Hauptachse 9 geneigt, so daß dieser Bereich die Form eines zur Hauptachse 9 hin laufenden Kegels besitzt. In einer Seite dieser kegelförmigen Wandung mündet die Einspeiseleitung 10 ein und in einer anderen Seite führt die Ringleitung 6 von der Wand 28 weg. Im Inneren der Vorrichtung 16 ist ein ebenfalls kegelförmiger entlang der Hauptachse 9 gestreckter Dichtkörper 27 angeordnet, welcher in einer dichtenden Position sowohl die Einspeiseleitung 10 als auch die Ringleitung 6 versperrt. In dieser dichtenden Position wird der Dichtkörper 27 durch einen Schmelzkörper 18 gehalten, der aus der Vorrichtung 16 entlang der Hauptachse 9 herausragt und auf dem Boden 12 des Ausbreitungsraumes 4 aufliegt. Der Schmelzkörper 18 ist über eine Schraube 30, die ebenfalls entlang der Hauptachse 9 gestreckt ist, in seiner Lage fixiert. Er besteht aus Kunststoff und der Dichtkörper 27 aus einem Metall, wie Stahl oder Keramik bzw. Kunststoff. Bei einem Kontakt der schematisch dargestellten Kernschmelze 17 mit dem Schmelzkörper 8 schmilzt dieser auf, wodurch der Dichtkörper 27 seine dichtende Position aufgrund des auf ihn wirkenden Drucks von dem in der Einspeiseleitung 10 anliegendem Kühlmittel, entlang der Hauptachse verschoben wird. Hierdurch ist eine Strömung des Kühlmittels 22, wie mit den Strömungspfeilen 29 dargestellt, durch die Vorrichtung 16 in die Ringleitung 6 ermöglicht.

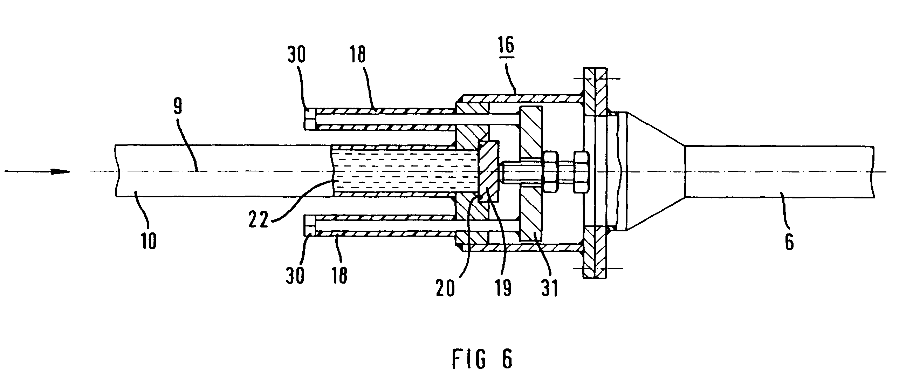

FIG 6 zeigt in einem Schnitt eine Vorrichtung 16, welches entlang einer Hauptachse 9 gestreckt ist. In diese führt die ebenfalls entlang der Hauptachse 9 gestreckt Einspeiseleitung 10 hinein und die ebenfalls entlang der Hauptachse 9 gestreckte Ringleitung 6 heraus. Die Vorrichtung 16 hat einen Dichtteller 19, der auf einem Dichtsitz 20 aufliegt und dadurch den Querschnitt der Einspeiseleitung 10 verschließt. Der Dichtteller 19 wird über eine senkrecht zur Hauptachse 9 verlaufende Platte 31 in der die Einspeiseleitung 10 verschließenden Position dadurch gehalten, daß zwei entlang der Hauptachse 9 verlaufende Schrauben 30 von einer Schmelzhülse 18 umgeben sind, die eine Bewegung der Schrauben 30 und damit der Platte 31 entlang der Hauptachse 9 unterbinden. Bei Eintritt einer Kernschmelze 17 in den Ausbreitungsraum 4 schmelzen die Schmelzhülsen 18 ab, so daß infolge des von dem Kühlmittel 22 auf den Dichtteller 19 ausgeübten Druckes dieser entlang der Hauptachse 9 verschoben wird. Hierdurch gelangt Kühlmittel 22 in die Vorrichtung 16 hinein und strömt über die Ringleitung 6 zu den nichtdargestellten Sprühdüsen.

Die Erfindung zeichnet sich durch ein passiv auslösendes Sprühsystem in einem Ausbreitungsraum für eine Kernschmelze aus, durch welches eine frühzeitige und großflächige Kühlung der sich ausbreitenden Kernschmelze mit einer geringen Menge an Kühlwasser erfolgt, so daß die Gefahr von Dampfexplosionen deutlich vermindert wird. Das Besprühen der Kernschmelze erfolgt vorzugsweise über eine an dem Umfang des Ausbreitungsraumes verlaufende Ringleitung, die an eine Kühlmittelreservoir angeschlossen ist, welches geodätisch so hoch über der Ringleitung angeordnet ist, daß ein für die großflächige Besprühung erforderlicher Druck gegeben ist. In entsprechenden Einspeiseleitungen liegt ständig Kühlmittel an, welches über eine Vorrichtung von der Ringleitung zurückgehalten wird. Die Vorrichtung öffnet temperaturabhängig auf passive Art und Weise, wodurch bei Eintritt von Kernschmelze in den Ausbreitungsraum sicher die direkte Kühlung der Kernschmelze, ohne Eingriff des Bedienungspersonals erfolgt. Weiterhin sind zumindest zwei Flutungsleitungen vorgesehen, die an ein großes Kühlmittelreservoir angeschlossen sind und über die Kühlmittel für eine langfristige Kühlung der Kernschmelze zuführbar ist.

## Patentansprüche

1. Kernreaktor mit einem Ausbreitungsraum (4) für Kernschmelze, der mit einer von einem Kühlmittelreservoir ausgehenden Kühlmittelleitung versehen ist, die eine temperaturabhängig öffnende Vorrichtung (16) mit einem Schmelzkörper (18) aufweist,
**dadurch gekennzeichnet**, daß die Kühlmittelleitung im Ausbreitungsraum (4) eine Sprühleitung (6) mit in das Innere des Ausbreitungsraumes (4) gerichteten Sprühdüsen (7) ist, deren Sprühfläche zumindest den größten Teil des Querschnitts des Ausbreitungsraumes (4) erfaßt, und daß die Vorrichtung (16) eine passiv temperaturabhängig öffnende, den Schmelzkörper (18) umfassende Armatur (16) ist, die so gesteuert ist, daß sie beim Eintreten der Kernschmelze (17) in den Ausbreitungsraum (4) öffnet und dadurch das Kühlmittelreservoir mit der Sprühleitung (6) verbindet.

2. Kernreaktor nach Anspruch 1, **dadurch gekennzeichnet**, daß die Sprühleitung (6) an den Wänden (5) des Ausbreitungsraumes (4) so angeordnet ist, daß sie den Querschnitt des Ausbreitungsraumes (4) umschließt.

3. Kernreaktor nach Anspruch 1, **dadurch gekennzeichnet**, daß die Sprühleitung (6) vom Boden (12) des Ausbreitungsprogramms (4) beabstandet über dem Querschnitt des Ausbreitungsraums (4) verläuft.

4. Kernreaktor nach Anspruch 1, 2 oder 3, **dadurch gekennzeichnet**, daß die Sprühleitung eine Ringleitung (6) mit mehreren Einspeiseleitungen (10) ist.

5. Kernreaktor nach einem der Ansprüche 1 bis 4,
**dadurch gekennzeichnet**, daß die Armatur (16) unterhalb der Sprühleitung (6) so angeordnet ist, daß sich der Schmelzkörper (18), der einen Dichtteller (19) gegen den Druck des Kühlmittels geschlossen hält, am Boden (12) des Ausbreitungsraumes (4) befindet.

## Claims

1. Nuclear reactor with a propagation space (4) for core melt, the said propagation space being provided with a coolant conduit which starts from a coolant reservoir and which has a device (16) opening in a temperature-dependent manner and having a melting body (18), characterized in that the coolant conduit in the propagation space (4) is a spray conduit (6) with spray nozzles (7) which are directed into the interior of the propagation space (4) and the spraying area of which covers at least the majority of the cross section of the propagation space (4), and in that the device (16) is a fitting (16) which opens passively in a temperature-dependent manner and includes the melting body (18) and is controlled in such a way that it opens when the core melt (17) enters the propagation space (4) and thereby connects the coolant reservoir to the spray conduit (6).

2. Nuclear reactor according to Claim 1, characterized in that the spray conduit (6) is arranged on the walls (5) of the propagation space (4), in such a way that it encloses the cross section of the propagation space (4).

3. Nuclear reactor according to Claim 1, characterized in that the spray conduit (6) runs, at a distance from the bottom (12) of the propagation space (4), over the cross section of the propagation space (4).

4. Nuclear reactor according to Claim 1, 2 or 3, characterized in that the spray conduit is a ring conduit (6) having a plurality of feed conduits (10).

5. Nuclear reactor according to one of Claims 1 to 4, characterized in that the fitting (16) is arranged below the spray conduit (6), in such a way that the melting body (18), which keeps a sealing disc (19) closed counter to the pressure of the coolant, is located at the bottom (12) of the propagation space (4).

## Revendications

1. Réacteur nucléaire, comprenant une chambre de propagation (4) du coeur en fusion, qui est munie d'une conduite de fluide de refroidissement sortant d'un réservoir de fluide de refroidissement, laquelle présente un dispositif (16) s'ouvrant en fonction de la température et comprenant un corps fusible (18), caractérisé en ce que la conduite de fluide de refroidissement dans la chambre de propagation (4) est une conduite de pulvérisation (6) dotée de buses de pulvérisation (7) dirigées à l'intérieur de la chambre de propagation (4), dont la surface de pulvérisation comprend au moins la majeure partie de la section de la chambre de propagation (4), et en ce que le dispositif (16) est une robinetterie (16) s'ouvrant passivement en fonction de la température et entourant le corps fusible (18), qui est commandée de façon telle qu'elle s'ouvre à l'entrée du coeur en fusion (17) dans la chambre de propagation (4), reliant ainsi le réservoir de fluide de refroidissement à la conduite de pulvérisation (6).

2. Réacteur nucléaire selon la revendication 1, caractérisé en ce que la conduite de pulvérisation (6) est disposée de telle sorte sur les parois (5) de la chambre de propagation (4) qu'elle enferme la section de ladite chambre de propagation (4).

3. Réacteur nucléaire selon la revendication 1, caractérisé en ce que la conduite de pulvérisation (6) s'étend sur la section de la chambre de propagation (4), à distance du fond (12) de ladite chambre de propagation (4).

4. Réacteur nucléaire selon la revendication 1, 2 ou 3, caractérisé en ce que la conduite de pulvérisation est une conduite circulaire (6) pourvue de plusieurs conduites d'alimentation (10).

5. Réacteur nucléaire selon l'une des revendications 1 à 4, caractérisé en ce que la robinetterie (16) est disposée de telle sorte au-dessous de la conduite de pulvérisation (6) que le corps fusible (18) maintenant fermée une assiette d'étanchéité (19) contre la pression du fluide de refroidissement, se trouve au fond (12) de la chambre de propagation (4).
